(19) Europäisches Patentamt
European Patent Office
Office européen des brevets

(11) EP 4 063 438 B1

(12) EUROPEAN PATENT SPECIFICATION

(45) Date of publication and mention of the grant of the patent:
**10.05.2023 Bulletin 2023/19**

(21) Application number: **21189419.1**

(22) Date of filing: **03.08.2021**

(51) International Patent Classification (IPC):
***C08J 5/18*** (2006.01) ***C08L 79/08*** (2006.01)
***C08G 73/10*** (2006.01) ***H01M 50/403*** (2021.01)
***H01M 50/423*** (2021.01) *H01M 10/0525* (2010.01)
*H01M 10/0565* (2010.01)

(52) Cooperative Patent Classification (CPC):
(C-Sets available)
**C08J 5/18; C08G 73/1032; C08L 79/08; H01M 50/403; H01M 50/423;** C08J 2379/08; C08L 2203/16; H01M 10/0525; H01M 10/0565; H01M 2300/0082; Y02E 60/10 (Cont.)

(54) **POLYIMIDE PRECURSOR-CONTAINING AQUEOUS COMPOSITION AND METHOD FOR PRODUCING POROUS POLYIMIDE FILM**

POLYIMIDVORLÄUFERHALTIGE WÄSSRIGE ZUSAMMENSETZUNG UND VERFAHREN ZUR HERSTELLUNG EINER PORÖSEN POLYIMIDFOLIE

COMPOSITION AQUEUSE CONTENANT UN PRÉCURSEUR DE POLYIMIDE ET PROCÉDÉ DE PRODUCTION DE FILM DE POLYIMIDE POREUX

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.03.2021 JP 2021054281**

(43) Date of publication of application:
**28.09.2022 Bulletin 2022/39**

(73) Proprietor: **Fujifilm Business Innovation Corp.**
**Tokyo (JP)**

(72) Inventors:
- **KASHIMA, Yasunobu**
  **Minamiashigara-shi (JP)**
- **YOSHIMURA, Kosaku**
  **Minamiashigara-shi (JP)**
- **ISHIZUKA, Takahiro**
  **Minamiashigara-shi (JP)**

(74) Representative: **Haseltine Lake Kempner LLP**
**Bürkleinstrasse 10**
**80538 München (DE)**

(56) References cited:
**JP-A- 2010 024 385**
**US-A1- 2014 220 330**
**US-A1- 2018 244 886**
**US-A1- 2019 263 995**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 79/08, C08L 25/14;**
**C08L 79/08, C08L 33/14**

## Description

BACKGROUND

Technical Field

The present invention relates to a polyimide precursor-containing aqueous composition and a method for producing a porous polyimide film.

Related Art

The polyimide resin is a material having excellent mechanical strength, chemical stability, and heat resistance, and a polyimide film having these properties is attracting attention.

The polyimide film may be applied to applications such as a filter (for example, a filtration filter, an oil filter, and a fuel filter) and a secondary battery (for example, a separator for a lithium secondary battery, and a holding body of a solid electrolyte in an all-solid-state battery).

For example, JP-A-2016-56225 discloses a varnish for producing a porous film, which contains at least one resin (A) selected from the group consisting of polyamic acid, polyimide, polyamide-imide precursor, and polyamide-imide, fine particles (B), and a silicon atom and/or fluorine atom-containing surfactant (C) having an alkylene oxide chain. US2018244886A discloses a polyimide precursor solution comprising resin particles having surface acidic groups; an aqueous solvent comprising water; and a polyimide precursor.

SUMMARY

An object of the present invention is to provide a polyimide precursor-containing aqueous composition from which a porous polyimide film having a reduced number of coarse pores is obtained, as compared with a polyimide precursor-containing aqueous composition containing a polyimide precursor, resin particles, a solvent containing water, and a surfactant having a polyalkylene oxide group.

<1> According to an aspect of the present disclosure, there is provided a polyimide precursor-containing aqueous composition, containing:

a polyimide precursor;
resin particles having a polyalkylene oxide group; and
a solvent containing water and an aprotic polar solvent.

<2> The polyimide precursor-containing aqueous composition according to <1>, in which the polyalkylene oxide group is a group represented by the following general formula (POA):

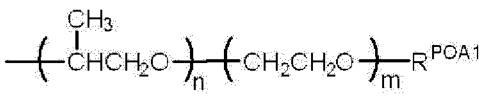 general formula (POA)

in the general formula (POA), $R^{POA1}$ represents a hydrogen atom, an alkyl group, or an aryl group, n represents an integer of 0 or 1 or more, m represents an integer of 0 or 1 or more, and n + m is an integer of 2 or more and 50 or less.

<3> The polyimide precursor-containing aqueous composition according to <2>, in which, in the general formula (POA), $R^{POA1}$ represents an alkyl group having 1 or more and 12 or less carbon atoms, n represents 0, and m represents an integer of 2 or more and 30 or less.

<4> The polyimide precursor-containing aqueous composition according to any one of <1> to <3>, in which the resin particles are resin particles containing a copolymer of a vinyl-based monomer A having the polyalkylene oxide group and a vinyl-based monomer B having no polyalkylene oxide group, and a mass ratio A/B of the vinyl-based monomer A to the vinyl-based monomer B is 1.5/1000 or more and 15/1000 or less.

<5> The polyimide precursor-containing aqueous composition according to <4>, in which the mass ratio A/B of the vinyl-based monomer A to the vinyl-based monomer B is 2/1000 or more and 10/1000 or less.

<6> The polyimide precursor-containing aqueous composition according to any one of <1> to <5>, in which a mass ratio of the resin particles to the aprotic polar solvent is 1 or more and 8 or less.

<7> The polyimide precursor-containing aqueous composition according to <6>, in which the mass ratio of the resin

particles to the aprotic polar solvent is 3 or more and 5 or less.

<8> The polyimide precursor-containing aqueous composition according to any one of <1> to <7>, in which a content of the water is 60 mass% or more with respect to a total mass of the polyimide precursor-containing aqueous composition.

<9> A method for producing a porous polyimide film, including:

coating the polyimide precursor-containing aqueous composition according to any one of <1> to <8> onto a substrate to form a coating film;
drying the coating film to form a film;
imidizing the polyimide precursor contained in the film to form a polyimide film; and
removing the resin particles from the film or the polyimide film.

<10> The method for producing a porous polyimide film according to <9>, in which a porous polyimide film having a film thickness of 50 μm or more is produced.

According to <1> or <2>, there is provided a polyimide precursor-containing aqueous composition from which a porous polyimide film having a reduced number of coarse pores is obtained, as compared with a polyimide precursor-containing aqueous composition containing a polyimide precursor, resin particles, a solvent containing water, and a surfactant having a polyalkylene oxide group.

According to <3>, there is provided a polyimide precursor-containing aqueous composition from which a porous polyimide film having a reduced number of coarse pores is obtained, as compared with a case where the group represented by the general formula (POA) is a group in which $R^{POA1}$ represents an alkyl group having 1 or more 12 or less carbon atoms, n represents 0, and m represents an integer of more than 30.

According to <4>, there is provided a polyimide precursor-containing aqueous composition from which a porous polyimide film having a reduced number of coarse pores is obtained, as compared with a case where the mass ratio A/B of the vinyl-based monomer A to the vinyl-based monomer B is less than 1.5/1000.

According to <5>, there is provided a polyimide precursor-containing aqueous composition from which a porous polyimide film having a reduced number of coarse pores is obtained, as compared with a case where the mass ratio A/B of the vinyl-based monomer A to the vinyl-based monomer B is less than 2/1000.

According to <6>, there is provided a polyimide precursor-containing aqueous composition from which a porous polyimide film having a reduced number of coarse pores is obtained, as compared with a case where the mass ratio of the resin particles to the aprotic polar solvent is less than 1 or more than 8.

According to <7>, there is provided a polyimide precursor-containing aqueous composition from which a porous polyimide film having a reduced number of coarse pores is obtained, as compared with a case where the mass ratio of the resin particles to the aprotic polar solvent is less than 3 or more than 5.

According to <8>, there is provided a polyimide precursor-containing aqueous composition from which a porous polyimide film having a reduced number of coarse pores is obtained even when the content of water is 70 mass% or more with respect to the total mass of the polyimide precursor-containing aqueous composition, as compared with a polyimide precursor-containing aqueous composition containing a polyimide precursor, resin particles, a solvent containing water, and a surfactant having a polyalkylene oxide group.

According to <9>, there is provided a method for producing a porous polyimide film from which a porous polyimide film having a reduced number of coarse pores is obtained, as compared with a case where a polyimide precursor-containing aqueous composition containing a polyimide precursor, resin particles, a solvent containing water, and a surfactant having a polyalkylene oxide group is applied.

According to <10>, there is provided a method for producing a porous polyimide film from which a porous polyimide film having a film thickness of 50 μm or more and having a reduced number of coarse pores is obtained, as compared with a case where a polyimide precursor-containing aqueous composition containing a polyimide precursor, resin particles, a solvent containing water, and a surfactant having a polyalkylene oxide group is applied.

BRIEF DESCRIPTION OF THE DRAWINGS

Exemplary embodiment(s) of the present invention will be described in detail based on the following figures, wherein:

Fig. 1 is a schematic diagram showing a porous polyimide film produced by using a polyimide precursor-containing aqueous composition according to the present exemplary embodiment;
Fig. 2 is a schematic partial cross-sectional view showing an example of a lithium ion secondary battery provided with the porous polyimide film produced by using the polyimide precursor-containing aqueous composition according

to the present exemplary embodiment as a separator for the lithium ion secondary battery; and

Fig. 3 is a schematic partial cross-sectional view showing an example of an all-solid-state battery provided with the porous polyimide film produced by using the polyimide precursor-containing aqueous composition according to the present exemplary embodiment.

DETAILED DESCRIPTION

Hereinafter, exemplary embodiments of the present invention will be described in detail.

In the present exemplary embodiment, the term "film" is a concept that includes not only what is generally called "film" but also what is generally called "sheet".

In the present exemplary embodiment, the term "solid content" refers to components excluding water and a water-soluble organic solvent (that is, aqueous solvent).

<Polyimide Precursor-containing Aqueous Composition>

A polyimide precursor-containing aqueous composition according to the present exemplary embodiment (hereinafter, also referred to as the "aqueous composition according to the present exemplary embodiment") contains a polyimide precursor, resin particles having a polyalkylene oxide group, and a solvent containing water and an aprotic polar solvent.

Here, the term "aqueous composition" refers to a composition containing water and having a total content of water and a water-soluble organic solvent (that is, an aqueous solvent) of 50 mass% or more with respect to the total mass of the aqueous composition.

With the above configuration, a porous polyimide film having a reduced number of coarse pores is obtained from the aqueous composition according to the present exemplary embodiment. The reasons are presumed as follows.

In the related art, a technique of using a surfactant in a polyimide precursor-containing aqueous composition in order to improve the dispersibility of resin particles is known.

However, when a coating film of the aqueous composition using an aprotic polar solvent together with water as a solvent is dried, the water evaporates at the final stage of drying, and the ratio of the aprotic polar solvent to the solvent is large.

When the ratio of the aprotic polar solvent to the solvent is large, the resin particles are likely to swell due to the aprotic polar solvent. Then, the interface between the solvent and the resin particles collapses, the surfactant is separated from the surface of the resin particles, and the function as the surfactant becomes difficult to obtain. Therefore, the resin particles tend to aggregate. Then, when the dried film containing the aggregated resin particles is heated to produce a porous polyimide film, coarse pores are formed. This phenomenon is particularly likely to occur in the case of producing a thick porous polyimide film in which the ratio of the aprotic polar solvent to the solvent is large for a long time.

In contrast, when resin particles having a polyalkylene oxide group are applied as the resin particles, steric hindrance due to the polyalkylene oxide group prevents the aggregation of the resin particles. Moreover, because the polyalkylene oxide group is in a state of being chemically bonded to the resin component of the resin particles, the polyalkylene oxide group does not separate from the resin particles even in the final stage of drying where the ratio of the aprotic polar solvent to the solvent is large. Therefore, the aggregation of the resin particles is prevented until the end of drying.

That is, since a dried film containing resin particles in which aggregation is prevented is obtained, a porous polyimide film having a reduced number of coarse pores is obtained.

From the above, it is presumed that with the above configuration, a porous polyimide film having a reduced number of coarse pores is obtained from the aqueous composition according to the present exemplary embodiment.

[Polyimide Precursor]

The aqueous composition according to the present exemplary embodiment contains a polyimide precursor.

The polyimide precursor is a resin (that is, polyimide precursor) having a repeating unit represented by the general formula (I).

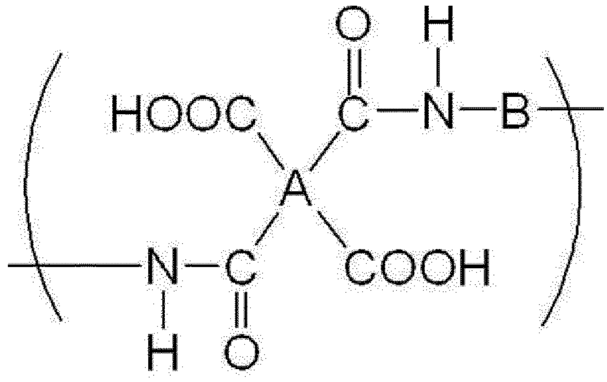

(I)

In the general formula (I), A represents a tetravalent organic group and B represents a divalent organic group.

Here, in the general formula (I), the tetravalent organic group represented by A is a residue obtained by removing four carboxyl groups from a tetracarboxylic dianhydride as a raw material.

On the other hand, the divalent organic group represented by B is a residue obtained by removing two amino groups from a diamine compound as a raw material.

That is, the polyimide precursor having a repeating unit represented by the general formula (I) is a polymer of a tetracarboxylic dianhydride and a diamine compound.

Examples of the tetracarboxylic dianhydride include both aromatic and aliphatic tetracarboxylic dianhydrides, and the aromatic tetracarboxylic dianhydride is preferred. That is, in the general formula (I), the tetravalent organic group represented by A is preferably an aromatic organic group.

Examples of the aromatic tetracarboxylic dianhydride include pyromellitic dianhydride, 3,3',4,4'-benzophenone tetracarboxylic dianhydride, 3,3',4,4'-biphenylsulfonetetracarboxylic dianhydride, 1,4,5,8-naphthalenetetracarboxylic dianhydride, 2,3,6,7-naphthalenetetracarboxylic dianhydride, 3,3',4,4'-biphenyl ether tetracarboxylic dianhydride, 3,3',4,4'-dimethyldiphenylsilanetetracarboxylic dianhydride, 3,3',4,4'-tetraphenylsilanetetracarboxylic dianhydride, 1,2,3,4-frantetracarboxylic dianhydride, 4,4'-bis(3,4-dicarboxyphenoxy)diphenylsulfide dianhydride, 4,4'-bis(3,4-dicarboxyphenoxy)diphenylsulfone dianhydride, 4,4'-bis(3,4-dicarboxyphenoxy)diphenylpropane dianhydride, 3,3',4,4'-perfluoroisopropyridene diphthalic dianhydride, 3,3',4,4'-biphenyltetracarboxylic dianhydride, 2,3,3',4'-biphenyltetracarboxylic dianhydride, bis(phthalic acid) phenylphosphine oxide dianhydride, p-phenylene-bis(triphenylphthalic acid)dianhydride, m-phenylene-bis(triphenylphthalic acid)dianhydride, bis(triphenylphthalic acid)-4,4'-diphenyl ether dianhydride, and bis(triphenylphthalic acid)-4,4'-diphenylmethane dianhydride.

Examples of the aliphatic tetracarboxylic dianhydride include: aliphatic or alicyclic tetracarboxylic dianhydrides such as butanetetracarboxylic dianhydride, 1,2,3,4-cyclobutanetetracarboxylic dianhydride, 1,3-dimethyl-1,2,3,4-cyclobutanetetracarboxylic dianhydride, 1,2,3,4-cyclopentanetetracarboxylic dianhydride, 2,3,5-tricarboxycyclopentyl acetate dianhydride, 3,5,6-tricarboxynorbonan-2-acetate dianhydride, 2,3,4,5-tetrahydrofuran tetracarboxylic dianhydride, 5-(2,5-dioxotetrahydrofuryl)-3-methyl-3-cyclohexene-1,2-dicarboxylic acid dianhydride, and bicyclo[2,2,2]-octo-7-ene-2,3,5,6-tetracarboxylic dianhydride; and aliphatic tetracarboxylic dianhydrides having an aromatic ring such as 1,3,3a,4,5,9b-hexahydro-2,5-dioxo-3-franyl)-naphtho[1,2-c]furan-1,3-dione, 1,3,3a,4,5,9b-hexahydro-5-methyl-5-(tetrahydro-2,5-dioxo-3-franyl)-naphtho[1,2-c]furan-1,3-dione, and 1,3,3a,4,5,9b-hexahydro-8-methyl-5-(tetrahydro-2,5-dioxo-3-franyl)-naphtho[1,2-c]furan-1,3-dione.

Among these, the tetracarboxylic dianhydride is preferably an aromatic tetracarboxylic dianhydride. Specifically, preferred are pyromellitic dianhydride, 3,3',4,4'-biphenyltetracarboxylic dianhydride, 2,3,3',4'-biphenyltetracarboxylic dianhydride, 3,3',4,4'-biphenyl ether tetracarboxylic dianhydride, and 3,3',4,4'-benzophenone tetracarboxylic dianhydride, more preferred are pyromellitic dianhydride, 3,3',4,4'-biphenyltetracarboxylic dianhydride, and 3,3',4,4'-benzophenone tetracarboxylic dianhydride, and particularly preferred is 3,3',4,4'-biphenyltetracarboxylic dianhydride.

The tetracarboxylic dianhydride may be used alone or in combination of two or more thereof.

When two or more tetracarboxylic dianhydrides are used in combination, aromatic tetracarboxylic dianhydrides or aliphatic tetracarboxylic acids may be used in combination, or an aromatic tetracarboxylic dianhydride and an aliphatic tetracarboxylic dianhydride may be used in combination.

On the other hand, the diamine compound is a diamine compound having two amino groups in the molecular structure thereof. Examples of the diamine compound include both aromatic and aliphatic diamine compounds, and the aromatic diamine compound is preferred. That is, in the general formula (I), the divalent organic group represented by

B is preferably an aromatic organic group.

Examples of the diamine compound include: aromatic diamines such as p-phenylenediamine, m-phenylenediamine, 4,4'-diaminodiphenylmethane, 4,4'-diaminodiphenylethane, 4,4'-diaminodiphenyl ether, 4,4'-diaminodiphenyl sulfide, 4,4'-diaminodiphenyl sulfone, 1,5-diaminonaphthalene, 3,3-dimethyl-4,4'-diaminobiphenyl, 5-amino-1-(4'-aminophenyl)-1,3,3-trimethylindane, 6-amino-1-(4'-aminophenyl)-1,3,3-trimethylindane, 4,4'-diaminobenzanilide, 3,5-diamino-3'-trifluoromethylbenzanilide, 3,5-diamino-4'-trifluoromethylbenzanilide, 3,4'-diaminodiphenyl ether, 2,7-diaminofluorene, 2,2-bis(4-aminophenyl)hexafluoropropane, 4,4'-methylene-bis (2-chloroaniline), 2,2',5,5'-tetrachloro-4,4'-diaminobiphenyl, 2,2'-dichloro-4,4'-diamino-5,5'-dimethoxybiphenyl, 3,3'-dimethoxy-4,4'-diaminobiphenyl, 4,4'-diamino-2,2'-bis(trifluoromethyl)biphenyl, 2,2-bis[4-(4-aminophenoxy) phenyl] propane, 2,2-bis[4-(4-aminophenoxy) phenyl]hexafluoropropane, 1,4-bis (4-aminophenoxy)benzene, 4,4'-bis(4-aminophenoxy)-biphenyl, 1,3'-bis (4-aminophenoxy) benzene, 9,9-bis(4-aminophenyl)fluorene, 4,4'-(p-phenylene isopropylidene)bisaniline, 4,4'-(m-phenylene isopropylidene)bisaniline, 2,2'-bis[4-(4-amino-2-trifluoromethylphenoxy)phenyl]hexafluoropropane, and 4,4'-bis[4-(4-amino-2-trifluoromethyl)phenoxy]-octafluorobiphenyl; aromatic diamines having two amino groups bonded to an aromatic ring and a hetero atom other than the nitrogen atom of the amino groups, such as diaminotetraphenylthiophene; and aliphatic diamines and alicyclic diamines such as 1,1-methaxylylenediamine, 1,3-propane diamine, tetramethyldiamine, pentamethylenediamine, octamethylenediamine, nonamethylenediamine, 4,4-diaminoheptamethylenediamine, 1,4-diaminocyclohexane, isophorone diamine, tetrahydrodicyclopentadienylenediamine, hexahydro-4,7-methanoindanylene dimethylenediamine, tricyclo[6,2,1,0$^{2.7}$]-undecylenic dimethyl diamine, and 4,4'-methylenebis(cyclohexylamine).

Among these, the diamine compound is preferably an aromatic diamine compound. Specifically, preferred are p-phenylenediamine, m-phenylenediamine, 4,4'-diaminodiphenylmethane, 4,4'-diaminodiphenyl ether, 3,4'-diaminodiphenyl ether, 4,4'-diaminodiphenyl sulfide, and 4,4'-diaminodiphenyl sulfone, and particularly preferred are 4,4'-diaminodiphenyl ether and p-phenylenediamine.

The diamine compound may be used alone or in combination of two or more thereof. When two or more diamine compounds are used in combination, aromatic diamine compounds or aliphatic diamine compounds may be used in combination, or an aromatic diamine compound and an aliphatic diamine compound may be used in combination.

The weight average molecular weight of the polyimide precursor for use in the present exemplary embodiment is preferably 5,000 or more and 300,000 or less, and more preferably 10,000 or more and 150,000 or less.

The weight average molecular weight of the polyimide precursor is measured by a gel permeation chromatography (GPC) method under the following measurement conditions.

- · Column: Tosoh TSKgel$\alpha$-M (7.8 mm I.D × 30 cm)
- · Eluent: DMF (dimethylformamide) /30 mM LiBr / 60 mM phosphoric acid
- · Flow rate: 0.6 mL/min
- · Injection amount: 60 $\mu$L
- · Detector: RI (Differential Refractometer)

The content of the polyimide precursor is preferably 0.1 mass% or more and 10 mass% or less, and more preferably 0.5 mass% or more and 8 mass% or less, with respect to the total mass of the aqueous composition according to the present exemplary embodiment.

[Resin Particles]

The resin particles refer to those in a state of being dispersed in the aqueous composition without being dissolved.

Here, the expression "the resin particles are not dissolved in the aqueous composition" means that the resin particles are not dissolved in a target liquid (specifically, the solvent containing water contained in the polyimide precursor-containing aqueous composition) at 25°C, and that the resin particles are dissolved in the range of 3 mass% or less with respect to the target liquid.

The resin particles are resin particles having a polyalkylene oxide group.

The expression "resin particles having a polyalkylene oxide group" indicates that a polyalkylene oxide group is chemically bonded to the polymerization unit of the resin constituting the resin particles.

Here, the polyalkylene oxide group is a group having a structural unit represented by $-(C_mH_{2m}O)_n-$. Here, m and n each independently represent an integer of 2 or more.

Specifically, the polyalkylene oxide group is preferably a group represented by the following general formula (POA).

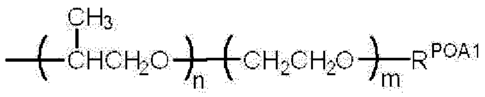 general formula (POA)

In the general formula (POA), $R^{POA1}$ represents a hydrogen atom, an alkyl group, or an aryl group, n represents an integer of 0 or 1 or more, m represents an integer of 0 or 1 or more, and n + m is an integer of 2 or more and 50 or less. n and m indicate an average number of moles of polyalkylene oxide added.

In the general formula (POA), the alkyl group represented by $R^{POA1}$ is a linear or branched alkyl group, and examples thereof include an alkyl group having 1 or more and 15 or less carbon atoms, 1 or more and 12 or less carbon atoms, 1 or more and 10 or less carbon atoms, 1 or more and 8 or less carbon atoms, 1 or more and 6 or less carbon atoms, or 1 or more and 4 or less carbon atoms.

In the general formula (POA), examples of the aryl group represented by $R^{POA1}$ include an aryl group having 6 or more and 30 or less carbon atoms, 6 or more and 20 or less carbon atoms, or 6 or more and 15 or less carbon atoms.

Specific examples of the aryl group represented by $R^{POA1}$ include a phenyl group and a biphenyl group.

The aryl group represented by $R^{POA1}$ may be a substituted aryl group. Examples of the substituent for the substituted aryl group include an alkyl group (for example, an alkyl group having 1 or more and 12 or less carbon atoms).

In the general formula (POA), n + m is an integer of 2 or more and 50 or less, preferably 2 or more and 40 or less, more preferably 2 or more and 30 or less, still more preferably 2 or more and 15 or less, and particularly preferably 4 or more and 8 or less.

Among the groups represented by the general formula (POA), the polyalkylene oxide group is preferably a group in which $R^{POA1}$ represents an alkyl group having 1 or more and 12 or less carbon atoms, n represents 0, and m represents an integer of 2 or more and 30 or less (that is, a polyethylene oxide group), from the viewpoint of obtaining a porous polyimide film having a reduced number of coarse pores.

Specific examples of the resin particles include resin particles such as: polystyrenes; poly(meth)acrylic acids; vinyl-based resins represented by polyvinyl acetate, polyvinyl alcohol, polyvinyl butyral, polyvinyl ether, etc.; condensation resins represented by polyesters, polyurethanes, polyamides, etc.; hydrocarbon-based resins represented by polyethylene, polypropylene, polybutadiene, etc.; and fluorine-based resins represented by polytetrafluoroethylene, polyvinyl fluoride, etc.

The resin particles are preferably resin particles using a monomer having a polyalkylene oxide group as the monomer forming these resins.

Examples of the monomer having a polyalkylene oxide group include an ester of polyethylene glycol monoalkyl ether and carboxylic acid monomer, an ester of a polyethylene glycol monoalkyl ether and a sulfonic acid monomer, an ester of a polyethylene glycol monoalkyl ether and a phosphoric acid monomer, a vinyl group-containing urethane formed from a polyethylene glycol monoalkyl ether and an isocyanate group-containing monomer, and a macromonomer having a polyvinyl alcohol structure.

These monomers may be used alone or in combination of two or more.

Here, "(meth)acrylic" means to include both "acrylic" and "methacrylic". In addition, (meta)acrylic acids include (meth)acrylic acid, (meth)acrylic acid ester, and (meth)acrylamide.

Further, the resin particles may or may not be cross-linked.

The resin particles are preferably vinyl-based resin particles, from the viewpoint of introducing a polyalkylene oxide group to obtain a porous polyimide film having a reduced number of coarse pores.

Specifically, the vinyl-based resin particles are preferably resin particles containing a copolymer of a vinyl-based monomer A having a polyalkylene oxide group and a vinyl-based monomer B having no polyalkylene oxide group.

Here, from the viewpoint of obtaining a porous polyimide film having a reduced number of coarse pores, the mass ratio A/B of the vinyl-based monomer Ato the vinyl-based monomer B is preferably 1.5/1000 or more and 15/1000 or less, and more preferably 2/1000 or more and 10/1000 or less.

When the mass ratio A/B of the vinyl-based monomer A to the vinyl-based monomer B is within the above range, an increase in the number of polyalkylene oxide groups on the surface of the resin particles is prevented. Accordingly, a film thickness variation due to an increase in liquid viscosity in the coating onto the dried film is prevented.

Examples of the vinyl-based monomer A having a polyalkylene oxide group include an ester of a polyethylene glycol monoalkyl ether and a carboxylic acid monomer.

Specific examples of the vinyl-based monomer A include polyalkylene glycol (meth)acrylates such as polypropylene glycol (meth)acrylate and polyethylene glycol (meth)acrylate, alkoxy polyalkylene glycol (meth)acrylates such as methoxypolyethylene glycol (meth)acrylate, and phenoxypolyalkylene glycol (meth)acrylates.

Examples of the commercially available product of the vinyl-based monomer A include: BLEMMER(registered trademark, same below)-PME-100, BLEMMER-PME-200, BLEMMER-PME-400, BLEMMER-PME-1000, BLEMMER-PME-4000, BLEMMER-50POEP-800B, and BLEMMER-AME-400, manufactured by NOF Corporation; and methoxypolyethylene glycol acrylate AM-90G, methoxypolyethylene glycol acrylate AM-230G, methoxypolyethylene glycol methacrylate M-90G, and methoxypolyethylene glycol methacrylate M-230G, manufactured by SHIN-NAKAMURA CHEMICAL CO, LTD.

Examples of the vinyl-based monomer B having no polyalkylene oxide group include: styrenes having a styrene skeleton, such as styrene, alkyl-substituted styrene (for example, α-methylstyrene, 2-methylstyrene, 3-methylstyrene, 4-methylstyrene, 2-ethylstyrene, 3-ethylstyrene, and 4-ethylstyrene), halogen-substituted styrene (for example, 2-chlorostyrene, 3-chlorostyrene, and 4-chlorostyrene), and vinyl naphthalene; (meta)acrylic acid esters such as methyl (meth)acrylate, ethyl (meth)acrylate, n-propyl (meth)acrylate, n-butyl (meth)acrylate, lauryl (meth)acrylate, 2-ethylhexyl (meth)acrylate; vinyl nitriles such as acrylonitrile and methacrylonitrile; vinyl ethers such as vinyl methyl ether and vinyl isobutyl ether; vinyl ketones such as vinyl methyl ketone, vinyl ethyl ketone, and vinyl isopropenyl ketone; acids such as (meth)acrylic acid, maleic acid, cinnamic acid, fumaric acid, and vinyl sulfonic acid; and bases such as ethyleneimine, vinylpyridine, and vinylamine.

The vinyl-based monomer B may be used in combination other monomers other than the above. As other monomers, a monofunctional monomer such as vinyl acetate, a bifunctional monomer such as divinylbenzene, ethylene glycol dimethacrylate, nonane diacrylate, and decanediol diacrylate, and a polyfunctional monomer such as trimethylolpropane triacrylate and trimethylolpropane trimethacrylate may be used in combination.

When a bifunctional monomer and a polyfunctional monomer are used in combination, cross-linked resin particles are obtained.

These vinyl-based monomers B may be used alone or in combination of two or more.

The resin particles are preferably resin particles made of polystyrenes and poly(meth)acrylic acids, and more preferably resin particles made of polystyrenes, a styrene-(meth)acrylic acid copolymer, or poly(meth)acrylic acids, from the viewpoints of manufacturability and adaptability of a particle removal step.

Here, the polystyrenes are resins having a structural unit derived from a styrene-based monomer (that is, a monomer having a styrene skeleton). More specifically, the polystyrenes contain the structural unit in a ratio of preferably 30 mol% or more, and more preferably 50 mol% or more, when the total amount of structural units constituting the resin is 100 mol%.

The poly(meth)acrylic acids mean methacrylic resins and acrylic resins, and are resins having a structural unit derived from a (meth)acrylic monomer (that is, a monomer having a (meth)acryloyl skeleton). More specifically, the poly(meth)acrylic acids contain, for example, structural units derived from (meth)acrylic acid and/or structural units derived from (meth)acrylic acid ester in a total ratio of preferably 30 mol% or more, and more preferably 50 mol% or more, when the total composition in the polymer is 100 mol%.

From the viewpoint of being easy to prevent the movement of particles due to a small difference in specific gravity with the liquid, the resin particles are preferably resin particles made of a resin having a structural unit derived from styrene, and contain the structural unit derived from styrene preferably in a ratio of 30 mol% or more, more preferably 50 mol% or more, still more preferably 80 mol% or more, and particularly preferably 100 mol%, when the total amount of the structural units constituting the resin is 100 mol%.

These resin particles may be used alone or in combination of two or more thereof.

The resin particles preferably maintain the particle shape during the process of producing the aqueous composition according to the present exemplary embodiment, the coating of the aqueous composition according to the present exemplary embodiment when producing the polyimide film, and the process of drying the coating film (before removing the resin particles). From these viewpoints, the glass transition temperature of the resin particles is preferably 60°C or higher, more preferably 70°C or higher, and still more preferably 80°C or higher.

The glass transition temperature is obtained from a DSC curve obtained by differential scanning calorimetry (DSC), and is more specifically obtained by the "extrapolated glass transition onset temperature" described in JIS K 7121:1987 "Method for measuring glass transition temperature of plastics", which is a method for obtaining the glass transition temperature.

The volume average particle diameter D50v of the resin particles is not particularly limited. The volume average particle diameter D50v of the resin particles is preferably 0.1 μm or more and 10 μm or less, for example. The lower limit of the volume average particle diameter D50v of the resin particles is preferably 0.2 μm or more, more preferably 0.3 μm or more, still more preferably 0.4 μm or more, and particularly preferably 0.5 μm or more. The upper limit of the volume average particle diameter D50v of the resin particles is preferably 7 μm or less, more preferably 5 μm or less, still more preferably 3 μm or less, and particularly preferably 2 μm or less.

The volume particle size distribution index (GSDv) of the resin particles is preferably 1.30 or less, more preferably 1.25 or less, and most preferably 1.20 or less.

The particle size distribution of the resin particles is measured by the following method.

The composition to be measured is diluted and the particle size distribution of particles in the liquid is measured using a Coulter counter LS13 (manufactured by Beckman Coulter). Based on the measured particle size distribution, the particle size distribution is measured by drawing a volume cumulative distribution from the small diameter side with

respect to the divided particle size range (so-called channel).

Then, in the volume cumulative distribution drawn from the small diameter side, the particle diameter corresponding to the cumulative percentage of 16% is the volume particle diameter D16v, the particle diameter corresponding to the cumulative percentage of 50% is the volume average particle diameter D50v, and the particle diameter corresponding to the cumulative percentage of 84% is the volume particle diameter D84v.

Then, the volume particle size distribution index (GSDv) of the particles is calculated as $(D84v/D16v)^{1/2}$ from the particle size distribution obtained by the above method.

When the particle size distribution of the resin particles is difficult to measure by the above method, it may be measured by a method such as a dynamic light scattering method.

The shape of the resin particles is preferably spherical.

When the spherical resin particles are used and the spherical resin particles are removed from the polyimide film to prepare a porous polyimide film, a porous polyimide film having spherical pores is obtained.

The "spherical" in resin particles includes both a spherical shape and a substantially spherical shape (that is, a shape close to a spherical shape).

The "spherical" specifically means that particles having a ratio (major axis/minor axis) of maj or axis to minor axis of 1 or more and less than 1.5 is present in a ratio of more than 80%. The ratio of particles having a ratio (major axis/minor axis) of major axis to minor axis of 1 or more and less than 1.5 is preferably 90% or more. The closer the ratio of major axis to minor axis is 1, the closer the particle becomes to a spherical shape.

The content of the resin particles may be determined according to the application of the polyimide film, and is preferably 0.1 mass% or more and 20 mass% or less, more preferably 0.5 mass% or more and 20 mass% or less, and still more preferably 1 mass% or more and 20 mass% or less, with respect to the total mass of the aqueous composition according to the present exemplary embodiment.

The content of the resin particles is preferably 10 mass% or more and 120 mass% or less, more preferably 25 mass% or more and 110 mass% or less, and still more preferably 30 mass% or more and 100 mass% or less, with respect to the polyimide precursor.

When the content of the resin particles is within the above range, it is easy to obtain a porous polyimide film having a high porosity while maintaining mechanical strength. A porous polyimide film having high mechanical strength and a high porosity is useful as a separator for a secondary battery.

[Solvent]

The solvent contains water and an aprotic polar solvent. Further, the solvent may contain an aqueous solvent other than water and the aprotic polar solvent.

Here, an aqueous solvent is a general term for water and a water-soluble organic solvent. Here, the "water-soluble" means that the target substance dissolves in water in an amount of 1 mass% or more at 25°C.

Examples of water include distilled water, ion-exchanged water, deionized water, ultrafiltered water, and pure water.

The content of water is preferably 60 mass% or more, more preferably 75 mass% or more, still more preferably 80 mass% or more, and particularly preferably 85 mass% or more, with respect to the total mass of the aqueous composition.

Even when the content of water is 60 mass% or more with respect to the total mass of the aqueous composition, a porous polyimide film having a reduced number of coarse pores is obtained.

The upper limit of the content of water may be determined according to the application of the polyimide film, and examples thereof include 90 mass%.

The content of water is preferably 70 mass% or more, more preferably 80 mass% or more, and still more preferably 85 mass% or more, with respect to the solvent.

Even when the content of water is 70 mass% or more with respect to the solvent, a porous polyimide film having a reduced number of coarse pores is obtained.

The aprotic polar solvent is preferably a solvent having a boiling point of 150°C or higher and 300°C or lower and a dipole moment of 3.0 D or more and 5.0 D or less.

Examples of the aprotic polar solvent include N-methyl-2-pyrrolidone (NMP), N,N-dimethylformamide (DMF), N,N-1,3-dimethyl-2-imidazolidinone (DMI), N,N-dimethylacetamide (DMAc), N,N-diethylacetamide (DEAc), dimethyl sulfoxide (DMSO), hexamethylenephosphoramide (HMPA), N-methylcaprolactam, N-acetyl-2-pyrrolidone, and 1,3-dimethyl-imidazolidone.

Among these, the aprotic polar solvent is preferably N-methyl-2-pyrrolidone (NMP), N,N-dimethylformamide (DMF), N,N-1,3-dimethyl-2-imidazolidinone (DMI), and N,N-dimethylacetamide (DMAc).

The content of the aprotic polar solvent is preferably 1 mass% or more and 10 mass% or less, more preferably 1.5 mass% or more and 8 mass% or less, and still more preferably 2.0 mass% or more and 6 mass% or less, with

respect to the total mass of the aqueous composition.

The content of the aprotic polar solvent is preferably 1.5 mass% or more and 15 mass% or less, more preferably 2.5 mass% or more and 10 mass% or less, and still more preferably 3.0 mass% or more and 8.0 mass% or less, with respect to the solvent.

Here, from the viewpoint of obtaining a porous polyimide film having a reduced number of coarse pores, the mass ratio (resin particles/aprotic polar solvent) of the resin particles to the aprotic polar solvent is preferably 1 or more and 8 or less, and more preferably 3 or more and 5 or less.

Examples of the water-soluble organic solvent include an organic amine compound.

The organic amine compound is a compound that amine-chlorides a polyimide precursor (specifically, a carboxyl group of the polyimide precursor) to increase the solubility in the aqueous solvent and that also functions as an imidization accelerator. Specifically, the organic amine compound is preferably an amine compound having a molecular weight of 170 or less. The organic amine compound is a compound excluding the diamine compound which is a raw material of the polyimide precursor.

The organic amine compound is preferably a water-soluble compound. The "water-soluble" means that the target substance dissolves in water in an amount of 1 mass% or more at 25°C.

Examples of the organic amine compound include a primary amine compound, a secondary amine compound, and a tertiary amine compound.

Among these, the organic amine compound is preferably at least one selected from a secondary amine compound and a tertiary amine compound, and particular preferably a tertiary amine compound. When a tertiary amine compound or a secondary amine compound (in particular, a tertiary amine compound) is applied as the organic amine compound, the solubility of the polyimide precursor in a solvent is easily increased, the film-forming property is easily improved, and the storage stability of the aqueous composition according to the present exemplary embodiment is easily improved.

Examples of the organic amine compound also include a polyvalent amine compound having a valency of 2 or more in addition to a monovalent amine compound. When a polyvalent amine compound having a valency of 2 or more is applied, a pseudo-cross-linked structure is easily formed between molecules of the polyimide precursor, and the storage stability of the aqueous composition according to the present exemplary embodiment is easily improved.

Examples of the primary amine compound include methylamine, ethylamine, n-propylpropylamine, isopropylamine, 2-ethanolamine, and 2-amino-2-methyl-1-propanol.

Examples of the secondary amine compound include dimethylamine, 2-(methylamino)ethanol, 2-(ethylamino)ethanol, and morpholine.

Examples of the tertiary amine compound include 2-dimethylaminoethanol, 2-diethylaminoethanol, 2-dimethylaminopropanol, pyridine, triethylamine, picoline, N-alkylmorpholine (for example, N-methylmorpholine and N-ethylmorpholine), 1,2-dimethylimidazole, 2-ethyl-4-methylimidazole, and N-alkylpiperidine (for example, N-methylpiperidine and N-ethylpiperidine).

Among these, a tertiary amine compound is preferred, N-alkylmorpholine is more preferred, and N-methylmorpholine is particularly preferred.

The organic amine compounds may be used alone or in combination of two or more thereof.

The content of the organic amine compound is preferably 40 mass% or more and 100 mass% or less, more preferably 45 mass% or more and 90 mass% or less, and still more preferably 50 mass% or more and 80 mass% or less, with respect to the polyimide precursor.

Examples of the water-soluble organic solvent include other water-soluble organic solvents such as a water-soluble ether-based solvent, a water-soluble ketone-based solvent, and a water-soluble alcohol-based solvent.

The water-soluble ether-based solvent is a water-soluble solvent having an ether bond in one molecule.

Examples of the water-soluble ether-based solvent include tetrahydrofuran (THF), dioxane, trioxane, 1,2-dimethoxyethane, diethylene glycol dimethyl ether, and diethylene glycol diethyl ether. Among these, the water-soluble ether-based solvent is preferably tetrahydrofuran and dioxane.

The water-soluble ketone-based solvent is a water-soluble solvent having a ketone group in one molecule.

Examples of the water-soluble ketone-based solvent include acetone, methyl ethyl ketone, and cyclohexanone. Among these, the water-soluble ketone-based solvent is preferably acetone.

The water-soluble alcohol-based solvent is a water-soluble solvent having an alcoholic hydroxy group in one molecule.

Examples of the water-soluble alcohol-based solvent include methanol, ethanol, 1-propanol, 2-propanol, tert-butyl alcohol, ethylene glycol, ethylene glycol monoalkyl ether, propylene glycol, propylene glycol monoalkyl ether, diethylene glycol, diethylene glycol monoalkyl ether, 1,2-propanediol, 1,3-propanediol, 1,3-butanediol, 1,4-butanediol, 2,3-butanediol, 1,5-pentanediol, 2-butene-1,4-diol, 2-methyl-2,4-pentanediol, glycerin, 2-ethyl-2-hydroxymethyl-1,3-propanediol, and 1,2,6-hexanetriol. Among these, the water-soluble alcohol-based solvent is preferably methanol, ethanol, 2-propanol, ethylene glycol, ethylene glycol monoalkyl ether, propylene glycol, propylene glycol monoalkyl ether, diethylene glycol, and diethylene glycol monoalkyl ether.

The other water-soluble organic solvents may be used alone or in combination of two or more thereof.

The other water-soluble organic solvents preferably have a boiling point of 270°C or lower, more preferably 60°C or higher and 250°C or lower, and still more preferably 80°C or higher and 230°C or lower. When the boiling point of the other water-soluble organic solvent is within the above range, the other water-soluble organic solvent is less likely to remain on the polyimide film, and a polyimide film having high mechanical strength is easily obtained.

The content of the solvent is preferably 75 mass% or more, and more preferably 80 mass% or more, with respect to the total mass of the aqueous composition according to the present exemplary embodiment.

[Other Components]

The aqueous composition according to the present exemplary embodiment may contain other components, if necessary.

The aqueous composition according to the present exemplary embodiment may contain a catalyst for promoting an imidization reaction, a leveling material for improving the quality of film formation, and the like.

As the catalyst for promoting the imidization reaction, a dehydrating agent such as an acid anhydride, an acid catalyst such as a phenol derivative, a sulfonic acid derivative, or a benzoic acid derivative may be used.

In addition, the aqueous composition according to the present exemplary embodiment may contain a conductive material (specifically, a conductive material (for example, having a volume resistivity of less than $10^7$ Ω·cm) or a semi-conductive material (for example, having a volume resistivity of $10^7$ Ω·cm or more and $10^{13}$ Ω·cm or less)) as a conductive agent added for imparting conductivity, for example, depending on the intended use of the polyimide film.

Examples of the conductive agent include: carbon black (for example, acidic carbon black having a pH of 5.0 or less); metals (for example, aluminum or nickel); metal oxides (for example, yttrium oxide or tin oxide); and ionic conductive materials (for example, potassium titanate or LiCl).

The conductive agents may be used alone or in combination of two or more thereof.

In addition, the aqueous composition according to the present exemplary embodiment may contain $LiCoO_2$, $LiMn_2O$, etc., which are used as electrodes of lithium ion batteries.

[Physical Properties]

The aqueous composition according to the present exemplary embodiment preferably has a viscosity at 25°C of 1 Pa s or more and 200 Pa s or less, and more preferably 5 Pa s or more and 180 Pa·s or less.

Even when the aqueous composition according to the present exemplary embodiment has the above viscosity, a porous polyimide film having a reduced number of coarse pores in which the resin particles do not easily aggregate is obtained.

The viscosity at 25°C of the aqueous composition according to the present exemplary embodiment is measured using an E-type viscometer (for example, TVE-22H, Toki Sangyo Co., Ltd.).

In the aqueous composition according to the present exemplary embodiment, the total content of solid contents is preferably 1 mass% or more and 35 mass% or less, more preferably 3 mass% or more and 30 mass% or less, and still more preferably 5 mass% or more and 25 mass% or less, with respect to the total mass of the aqueous composition according to the present exemplary embodiment, from the viewpoint of achieving the viscosity at 25°C.

<Method for Producing Porous Polyimide Film>

The method for producing a porous polyimide film according to the present exemplary embodiment includes: a step of coating the above aqueous composition according to the present exemplary embodiment onto a substrate to form a coating film (also referred to as a first step); a step of drying the coating film to form a film containing a polyimide precursor and resin particles (also referred to as a second step); a step of imidizing the polyimide precursor contained in the film to form a polyimide film (also referred to as a third step); and a step of removing the resin particles from the film or the polyimide film (also called a fourth step).

Hereinafter, an example of a suitable method for producing a porous polyimide film according to the present exemplary embodiment will be described with reference to the drawings.

Fig. 1 is a schematic view showing a structure of a porous polyimide film obtained by the method for producing a porous polyimide film according to the present exemplary embodiment.

In Fig. 1, 31 denotes a substrate, 51 denotes a release layer, 10A denotes a pore, and 10 denotes a porous polyimide film.

[First Step]

In the first step, the above aqueous composition according to the present exemplary embodiment (that is, the aqueous composition containing the polyimide precursor, the resin particles, and the solvent containing water and the aprotic polar solvent) is coated onto a substrate to form a coating film.

[Method for Preparing Aqueous Composition]

In the first step, first the aqueous composition according to the present exemplary embodiment is prepared.
Specific examples of the method for preparing the aqueous composition include the following method.
First, resin particles are granulated in the solvent containing water and the aprotic polar solvent to obtain a resin particle dispersion liquid. Then, a tetracarboxylic dianhydride and a diamine compound are polymerized in the resin particle dispersion liquid in the presence of an organic amine compound to obtain to generate a resin (that is, polyimide precursor), thereby giving a aqueous composition.
When preparing the aqueous composition, a polyimide precursor-containing liquid obtained by polymerizing a tetracarboxylic dianhydride and a diamine compound in an organic solvent such as an aprotic polar solvent (for example, N-methylpyrrolidone (NMP)) to generate a resin (polyimide precursor), and then charging the solution into an aqueous solvent to precipitate the resin (polyimide precursor) may be used.

[Coating of Aqueous Composition]

In the first step, the aqueous composition obtained by the method described above is coated onto a substrate to form a coating film.
The substrate (the substrate 31 in Fig. 1) onto which the aqueous composition is coated is not particularly limited.
Examples of the substrate include a resin substrate made of polystyrene, polyethylene terephthalate or the like; a glass substrate; a ceramic substrate; a metallic substrate made of iron, stainless steel (SUS) or the like; and a composite material substrate made of a material combining the above materials.
If necessary, the substrate may be provided with a release layer (the release layer 51 in Fig. 1) by performing a release treatment with, for example, a silicone or fluorine release agent. It is also effective to roughen the surface of the substrate to a size of about the particle diameter of the resin particles to promote the exposure of resin particles on the contact surface of the substrate.
The method of coating the aqueous composition onto the substrate is not particularly limited, and examples thereof include various methods such as a spray coating method, a rotary coating method, a roll coating method, a bar coating method, a slit die coating method, and an inkjet coating method.

[Second Step]

In the second step, the coating film obtained in the first step is dried to form a film (that is, a dried film).
The method of drying the coating film formed on the substrate is not particularly limited, and examples thereof include various methods such as heat drying, natural drying, and vacuum drying.
More specifically, it is preferable to form the film by drying the coating film such that the solvent remaining in the film is 50% or less (more preferably 30% or less) with respect to the solid content of the film.
In the second step, a treatment of exposing the resin particles may be performed in the process of drying to form the film. By performing the treatment of exposing the particles, the porosity of the porous polyimide film can be increased.
Specific examples of the treatment of exposing the resin particles include the methods shown below.
In the process of drying the coating film to form the film, the polyimide precursor in the formed film is in a state of being soluble in water as described above. Therefore, the resin particles may be exposed from the film by, for example, wiping the film with water or immersing the film in water. Specifically, for example, the polyimide precursor covering the resin particles (and the solvent) is (are) removed by performing a treatment of exposing the resin particles by wiping the surface of the film with water. As a result, the resin particles are exposed on the surface of the treated film.
In particular, when a film in which the resin particles are embedded is formed, it is preferable to adopt the above treatment as a treatment of exposing the resin particles embedded in the film.

[Third Step]

In the third step, the polyimide precursor contained in the film obtained in the second step is imidized to form a polyimide film.

In the third step, specifically, the film obtained in the second step is heated to progress imidization and the polyimide film is thereby formed.
As the imidization progresses and the imidization rate increases, the polyimide film is less soluble in the organic solvent.

[Imidization]

In the third step, for heating to imidize the polyimide precursor in the film, for example, heating in two or more stages is preferably used.
For example, when the particles are resin particles and are heated in two stages, specifically, the following heating conditions are adopted.
The heating condition in the first stage is preferably a temperature at which the shape of the resin particles is maintained. For example, the heating temperature is preferably in the range of 50°C or higher and 150°C or lower, and more preferably in the range of 60°C or higher and 140°C or lower. The heating time is preferably in the range of 10 minutes or longer and 60 minutes or shorter. The higher the heating temperature, the shorter the heating time may be.
Examples of the heating conditions in the second stage include heating at 150°C or higher and 450°C or lower (preferably 200°C or higher and 400°C or lower) for 20 minutes or longer and 120 minutes or shorter. When the heating conditions are set within these ranges, the imidization reaction further progresses. During the heating reaction, the temperature is preferably gradually increased stepwise or at a constant rate before the final temperature of heating is reached.
The heating conditions are not limited to the above two-stage heating method, and for example, a one-stage heating method may be adopted. In the case of the one-stage heating method, for example, the imidization may be completed only under the heating conditions shown in the second stage above.

[Fourth Step]

In the fourth step, the resin particles are removed from the film obtained in the second step or the polyimide film obtained in the third step. After the fourth step, a resin particle portion becomes a pore (pore 10A in Fig. 1), and a porous polyimide film (porous polyimide film 10 in Fig. 1) is obtained.
In the fourth step, specifically, the removal of the resin particles may be carried out in the process of heating the film to imidize the polyimide precursor with respect to the film obtained in the second step, or the resin particles may be removed from the polyimide film after the imidization is completed in the third step.
Examples of the method of removing the resin particles from the film include a method of decomposing and removing the resin particles by heating, a method of dissolving and removing the resin particles with an organic solvent, and a method of removing the resin particles by decomposing the resin particles with a laser, and the like.
In the case of using the method of decomposing and removing the resin particles by heating, this method may also serve as the third step described above. That is, the resin particles may be removed by heating during the third step.
These methods may be used alone or in combination of two or more thereof.
In the fourth step, in the case of the method of decomposing and removing the resin particles by heating, it is preferable to heat the resin particles at a temperature equal to or higher than the melting temperature thereof.
The resin particles may be removed under the heating conditions of imidization in the third step.
Specific examples of the method of dissolving and removing the resin particles with an organic solvent include a method of bringing the film or the polyimide film into contact with the organic solvent to dissolve and remove the resin particles with the organic solvent.
Examples of the method of bringing the film or the polyimide film into contact with the organic solvent include a method of immersing the film or the polyimide film in the organic solvent, a method of coating the organic solvent onto the film or the polyimide film, and a method of bringing the film or the polyimide film into contact with vapor of the organic solvent.
The organic solvent used for dissolving the resin particles is not particularly limited as long as it is an organic solvent that does not dissolve the polyimide precursor and the polyimide and may dissolve the resin particles.
Examples of the organic solvent include: ethers such as tetrahydrofuran and 1,4-dioxane; aromatic substances such as benzene and toluene; ketones such as acetone; and esters such as ethyl acetate.
Among these, preferred are ethers such as tetrahydrofuran and 1,4-dioxane, and aromatic substances such as benzene and toluene, and more preferred are tetrahydrofuran and toluene.
In the case of using the method of dissolving and removing the resin particles with an organic solvent, the method is preferably performed when the imidization ratio of the polyimide precursor in the film is 10% or more, from the viewpoints of improving the removability of the resin particles and preventing the film from being dissolved in the organic solvent.

Examples of the method of setting the imidization ratio to 10% or more include a method of heating under the heating conditions of the first stage in the third step.

That is, it is preferable that the resin particles in the film are dissolved and removed with an organic solvent after the heating in the first stage is performed in the third step.

Here, the imidization ratio of the polyimide precursor will be described.

Examples of a partially imidized polyimide precursor include a precursor having a structure having a repeating unit represented by the following general formula (I-1), the following general formula (I-2), and the following general formula (I-3).

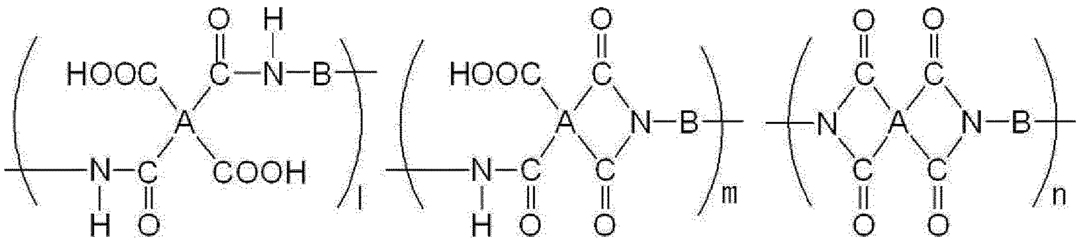

(I-1) (I-2) (I-3)

In the general formula (I-1), the general formula (I-2), and the general formula (I-3), A represents a tetravalent organic group and B represents a divalent organic group. l represents an integer of 1 or more, and m and n independently represent an integer of 0 or 1 or more.

A and B have the same meaning as A and B in the above general formula (I).

The imidization ratio of the polyimide precursor represents the ratio of the number of imide-ring-closed bond parts (2n + m) to the total number of bonds (2l + 2m + 2n) in the bonding part of the polyimide precursor which is a reaction part of the tetracarboxylic dianhydride and the diamine compound. That is, the imidization ratio of the polyimide precursor is indicated by "(2n + m)/(2l + 2m + 2n)".

The imidization ratio of the polyimide precursor (value of "(2n + m)/(2l + 2m + 2n)") is measured by the following method.

-Measurement of Imidization Ratio of Polyimide Precursor-

· Preparation of polyimide precursor sample

(i) A polyimide precursor solution to be measured is coated onto a silicon wafer in a film thickness range of 1 μm or more and 10 μm or less to prepare a coating film sample.

(ii) The coating film sample is immersed in tetrahydrofuran (THF) for 20 minutes to replace the solvent in the coating film sample with tetrahydrofuran (THF). The solvent for immersion is not limited to THF, and may be selected from a solvent that does not dissolve the polyimide precursor and may be miscible with the solvent component contained in the polyimide precursor solution. Specifically, alcohol solvents such as methanol and ethanol, and ether compounds such as dioxane may be used.

(iii) The coating film sample is taken out from the THF, and $N_2$ gas is sprayed onto the THF adhering to the surface of the coating film sample to remove the THF. A treatment is performed for 12 hours or longer in a range of 5°C or higher and 25°C or lower under a reduced pressure of 10 mmHg or less to dry the coating film sample, so as to prepare a polyimide precursor sample.

· Preparation of 100% imidized standard sample

(iv) In the same manner as in the (i) above, a polyimide precursor solution to be measured is coated onto a silicon wafer to prepare a coating film sample.

(v) The coating film sample is heated at 380°C for 60 minutes to carry out an imidization reaction to prepare a 100% imidized standard sample.

· Measurement and analysis

(vi) Infrared absorption spectra of the 100% imidized standard sample and the polyimide precursor sample are measured using a Fourier transform infrared spectrophotometer (FT-730, manufactured by HORIBA, Ltd.). The ratio I' (100) of the absorption peak (Ab'(1780 $cm^{-1}$)) derived from the imide bond near 1780 $cm^{-1}$ to the absorption peak (Ab'(1500 $cm^{-1}$)) derived from the aromatic ring near 1500 $cm^{-1}$ in the 100% imidized standard sample is determined.

(vii) Similarly, the polyimide precursor sample is measured, and the ratio I (x) of the absorption peak (1780 $cm^{-1}$) derived from the imide bond near 1780 $cm^{-1}$ to the absorption peak (1500 $cm^{-1}$) derived from the aromatic ring near 1500 $cm^{-1}$ is determined.

Then, using the measured absorption peaks I' (100) and I (x), the imidization ratio of the polyimide precursor is calculated based on the following equation.

·

$$\text{Equation: Imidization ratio of polyimide precursor} = I(x)/I'(100)$$

·

$$\text{Equation: } I'(100) = (Ab'(1780\ cm^{-1}))/(Ab'(1500\ cm^{-1}))$$

·

$$\text{Equation: } I(x) = (Ab(1780\ cm^{-1}))/(Ab(1500\ cm^{-1}))$$

The measurement of the imidization ratio of the polyimide precursor is applied to the measurement of the imidization ratio of an aromatic polyimide precursor. When measuring the imidization ratio of an aliphatic polyimide precursor, a peak derived from a structure that does not change before and after the imidization reaction is used as an internal standard peak instead of the absorption peak of the aromatic ring.

The substrate used in the first step may be peeled off from the film after the second step, may be peeled off from the polyimide film after the third step, or may be peeled off from the obtained porous polyimide film after the fourth step.

As described above, the polyimide film or the porous polyimide film is produced.

[Average Film Thickness of Porous Polyimide Film]

The average film thickness of the porous polyimide film produced by using the aqueous composition according to the present exemplary embodiment is not particularly limited and is selected according to the intended use.

The average film thickness of the porous polyimide film may be, for example, 10 μm or more and 1000 μm or less. The average film thickness of the porous polyimide film is preferably 20 μm or more, and more preferably 30 μm or more. Further, the average film thickness of the porous polyimide film is preferably 500 μm or less, and more preferably 400 μm or less.

In the case of the above film thickness, the porous polyimide film is suitable for a separator for a secondary battery described later.

In particular, when producing a porous polyimide film having a film thickness of 50 μm or more (preferably 100 μm or more), as described above, during drying, the ratio of the aprotic polar solvent in the solvent is large for a long time, and the resin particles tend to aggregate. However, in the method for producing a porous polyimide film using the aqueous composition according to the present exemplary embodiment, a porous polyimide film having a reduced number of coarse pores is obtained even when the film thickness is 50 μm or more.

The average film thickness of the polyimide film or the porous polyimide film in the present exemplary embodiment is calculated by measuring the film thickness of the polyimide film at five points using an eddy current film thickness meter CTR-1500E manufactured by SANKO ELECTRONICS and calculating the arithmetic average of the film thicknesses at the five points.

[Application of Porous Polyimide Film]

The porous polyimide film produced by using the aqueous composition according to the present exemplary embodiment may be applied to, for example, a filter application, a secondary battery application, or the like.
In particular, the above porous polyimide film is suitable as a separator for a lithium ion secondary battery.

<Lithium Ion Secondary Battery>

A lithium ion secondary battery provided with the porous polyimide film produced by using the polyimide precursor-containing aqueous composition according to the present exemplary embodiment as a separator for the lithium ion secondary battery will be descried with reference to Fig. 2.
Fig. 2 is a schematic partial cross-sectional view showing an example of a lithium ion secondary battery to which a separator for a lithium ion secondary battery is applied.
As shown in Fig. 2, a lithium ion secondary battery 100 includes a positive electrode active material layer 110, a separator layer 510, and a negative electrode active material layer 310 housed inside an exterior member (not shown). The positive electrode active material layer 110 is provided on a positive electrode current collector 130, and the negative electrode active material layer 310 is provided on a negative electrode current collector 330. The separator layer 510 is provided to separate the positive electrode active material layer 110 and the negative electrode active material layer 310, and is arranged between the positive electrode active material layer 110 and the negative electrode active material layer 310 such that the positive electrode active material layer 110 and the negative electrode active material layer 310 face each other. The separator layer 510 includes a separator 511 and an electrolytic solution 513 filled inside the pores of the separator 511.
The porous polyimide film produced by using the aqueous composition according to the present exemplary embodiment is applied to the separator 511. The positive electrode current collector 130 and the negative electrode current collector 330 are members provided if necessary.

(Positive Electrode Current Collector 130 and Negative Electrode Current Collector 330)

The material for use in the positive electrode current collector 130 and the negative electrode current collector 330 is not particularly limited, and any known conductive material may be used. For example, metals such as aluminum, copper, nickel and titanium may be used.

(Positive Electrode Active Material Layer 110)

The positive electrode active material layer 110 is a layer containing a positive electrode active material. If necessary, known additives such as a conductive auxiliary and a binder resin may be contained. The positive electrode active material is not particularly limited, and a known positive electrode active material is used. Examples thereof include lithium-containing composite oxides ($LiCoO_2$, $LiNiO_2$, $LiMnO_2$, $LiMn_2O_4$, $LiFeMnO_4$, $LiV_2O_5$, etc.), lithium-containing phosphates ($LiFePO_4$, $LiCoPO_4$, $LiMnPO_4$, $LiNiPO_4$, etc.) and conductive polymers (polyacetylene, polyaniline, polypyrrole, polythiophene, etc.). The positive electrode active materials may be used alone or in combination of two or more thereof.

(Negative Electrode Active Material Layer 310)

The negative electrode active material layer 310 is a layer containing a negative electrode active material. If necessary, known additives such as a binder resin may be contained. The negative electrode active material is not particularly limited, and a known positive electrode active material is used. Examples thereof include carbon materials (graphite (natural graphite, artificial graphite), carbon nanotubes, graphitized carbon, low temperature calcined carbon, etc.), metals (aluminum, silicon, zirconium, titanium, etc.), and metal oxides (tin dioxide, lithium titanate, etc.). The negative electrode active materials may be used alone or in combination of two or more thereof.

(Electrolytic Solution 513)

Examples of the electrolytic solution 513 include a non-aqueous electrolyte solution containing an electrolyte and a non-aqueous solvent.
Examples of the electrolyte include lithium salt electrolytes ($LiPF_6$, $LiBF_4$, $LiSbF_6$, $LiAsF_6$, $LiClO_4$, $LiN(FSO_2)_2$, $LiN(CF_3SO_2)_2$, $LiN(C_2F_5SO_2)$, and $LiC(CF_3SO_2)_3$). The electrolytes may be used alone or in combination of two or more thereof.

Examples of the non-aqueous solvent include cyclic carbonates (ethylene carbonate, propylene carbonate, butylene carbonate, etc.), and chain carbonates (diethyl carbonate, dimethyl carbonate, ethyl methyl carbonate, methyl acetate, ethyl acetate, methyl propionate, ethyl propionate, γ-butyrolactone, 1,2-dimethoxyethane, 1,2-diethoxyethane, etc.). The non-aqueous solvents may be used alone or in combination of two or more thereof.

(Method for Producing Lithium Ion Secondary Battery 100)

An example of a method for producing the lithium ion secondary battery 100 will be described.

A coating liquid for forming the positive electrode active material layer 110 containing the positive electrode active material is coated onto and dried on the positive electrode current collector 130 to obtain a positive electrode having the positive electrode active material layer 110 provided on the positive electrode current collector 130.

Similarly, the coating liquid for forming the negative electrode active material layer 310 containing the negative electrode active material is coated onto and dried on the negative electrode current collector 330 to obtain a negative electrode having the negative electrode active material layer 310 provided on the negative electrode current collector 330. The positive electrode and the negative electrode may be subjected to compression processing, if necessary.

Next, the separator 511 is arranged between the positive electrode active material layer 110 of the positive electrode and the negative electrode active material layer 310 of the negative electrode such that the positive electrode active material layer 110 of the positive electrode and the negative electrode active material layer 310 of the negative electrode face each other, thereby forming a laminated structure. In the laminated structure, the positive electrode current collector 130, the positive electrode active material layer 110, the separator layer 510, the negative electrode active material layer 310, and the negative electrode current collector 330 are laminated in this order. At this time, the laminated structure may be subjected to compression processing, if necessary.

Next, the laminated structure is housed in an exterior member, and then the electrolytic solution 513 is injected into the laminated structure. The injected electrolytic solution 513 penetrates into the pores of the separator 511.

Thus, the lithium ion secondary battery 100 is obtained.

<All-solid-state Battery>

Next, an all-solid-state battery to which the porous polyimide film produced by using the aqueous composition according to the present exemplary embodiment is applied will be described. Hereinafter, description will be made with reference to Fig. 3.

Fig. 3 is a schematic partial cross-sectional view showing an example of the all-solid-state battery according to the present exemplary embodiment. As shown in Fig. 3, an all-solid-state battery 200 includes a positive electrode active material layer 220, a solid electrolyte layer 620, and a negative electrode active material layer 420 which are housed inside an exterior member (not shown). The positive electrode active material layer 220 is provided on a positive electrode current collector 240, and the negative electrode active material layer 420 is provided on a negative electrode current collector 440. The solid electrolyte layer 620 is arranged between the positive electrode active material layer 220 and the negative electrode active material layer 420 such that the positive electrode active material layer 220 and the negative electrode active material layer 420 face each other. The solid electrolyte layer 620 includes a solid electrolyte 624 and a holding body 622 that holds the solid electrolyte 624, and the solid electrolyte 624 is filled inside the pores of the holding body 622. The porous polyimide film produced by using the aqueous composition according to the present exemplary embodiment is applied to the holding body 622 that holds the solid electrolyte 624. The positive electrode current collector 240 and the negative electrode current collector 440 are members provided if necessary.

(Positive Electrode Current Collector 240 and Negative Electrode Current Collector 440)

Examples of the material for use in the positive electrode current collector 240 and the negative electrode current collector 440 include the same materials as those described in the above lithium ion secondary battery.

(Positive Electrode Active Material Layer 220 and Negative Electrode Active Material Layer 420)

Examples of the material for use in the positive electrode active material layer 220 and the negative electrode active material layer 420 include the same materials as those described in the above lithium ion secondary battery.

(Solid Electrolyte 624)

The solid electrolyte 624 is not particularly limited, and examples thereof include known solid electrolytes. Examples thereof include a polymer solid electrolyte, an oxide solid electrolyte, a sulfide solid electrolyte, a halide solid

electrolyte, and a nitride solid electrolyte.

Examples of the polymer solid electrolyte include fluororesins (homopolymers such as polyvinylidene fluoride, polyhexafluoropropylene, and polytetrafluoroethylene, copolymers having the above as structural units, etc.), polyethylene oxide resins, polyacrylonitrile resins, and polyacrylate resins. The sulfide solid electrolyte is preferably contained because of having excellent lithium ion conductivity. In the same respect, it is preferable to contain a sulfide solid electrolyte containing sulfur and at least one of lithium and phosphorus as constituent elements.

Examples of the oxide solid electrolyte include oxide solid electrolyte particles containing lithium. Examples thereof include $Li_2O$-$B_2O_3$-$P_2O_5$ and $Li_2O$-$SiO_2$.

Examples of the sulfide solid electrolyte include a sulfide solid electrolyte containing sulfur and at least one of lithium and phosphorus as constituent elements. Examples thereof include $8Li_2O \cdot 67Li_2S \cdot 25P_2S_5$, $Li_2S$, $P_2S_5$, $Li_2S$-$SiS_2$, LiI-$Li_2S$-$SiS_2$, LiI-$Li_2S$-$P_2S_5$, LiI-$Li_3PO_4$-$P_2S_5$, LiI-$Li_2S$-$P_2O_5$, and LiI-$Li_2S$-$B_2S_3$.

Examples of the halide solid electrolyte include LiI.

Examples of the nitride solid electrolyte include $Li_3N$.

(Method for Producing All-solid-state Battery 200)

An example of a method for producing the all-solid-state battery 200 will be described.

A coating liquid for forming the positive electrode active material layer 220 containing the positive electrode active material is coated onto and dried on the positive electrode current collector 240 to obtain a positive electrode having the positive electrode active material layer 220 provided on the positive electrode current collector 240.

Similarly, the coating liquid for forming the negative electrode active material layer 420 containing the negative electrode active material is coated onto and dried on the negative electrode current collector 440 to obtain a negative electrode having the negative electrode active material layer 420 provided on the negative electrode current collector 440.

The positive electrode and the negative electrode may be subjected to compression processing, if necessary.

Next, a coating liquid containing the solid electrolyte 624 for forming the solid electrolyte layer 620 is coated onto a substrate and dried to form a layered solid electrolyte.

Next, as a material for forming the solid electrolyte layer 620, a polyimide film (the porous polyimide film produced by using the aqueous composition according to the present exemplary embodiment) as the holding body 622 and the layered solid electrolyte 624 are superposed on the positive electrode active material layer 220 of the positive electrode. Further, the negative electrode is superposed on the material for forming the solid electrolyte layer 620 such that the negative electrode active material layer 420 of the negative electrode faces the solid electrolyte layer 620, thereby forming a laminated structure. In the laminated structure, the positive electrode current collector 240, the positive electrode active material layer 220, the solid electrolyte layer 620, the negative electrode active material layer 420, and the negative electrode current collector 440 are laminated in this order.

Next, the laminated structure is subjected to compression processing, and the pores of the polyimide film which is the holding body 622 are impregnated with the solid electrolyte 624 to hold the solid electrolyte 624.

Next, the laminated structure is housed in an exterior member.

Thus, the all-solid-state battery 200 is obtained.

Examples

Examples will be described below, but the present invention is not limited to these Examples. In the following description, all "parts" and "%" are based on mass unless otherwise specified.

[Preparation of Resin Particle Dispersion Liquid]

-Preparation of resin particle dispersion liquid (1)-

1000 parts by mass of styrene, 5 parts by mass of methoxypolyethylene glycol methacrylate ("BLEMMER PME-400" manufactured by NOF Corporation), 24 parts by mass of a surfactant Dowfax2A1 (a 47% solution, manufactured by Dow Chemical Company), and 580 parts by mass of ion-exchanged water are mixed, and the mixture is stirred and emulsified at 1,500 rpm for 30 minutes with a dissolver to prepare a monomeric emulsion liquid.

Subsequently, 1.1 parts by mass of Dowfax2A1 (a 47% solution, manufactured by Dow Chemical Company) and 1270 parts by mass of ion-exchanged water are charged into the reaction vessel. After heating to 75°C under a nitrogen stream, 75 parts by mass of the monomeric emulsion liquid is added. Thereafter, a polymerization initiator solution in which 15 parts by mass of ammonium persulfate is dissolved in 98 parts by mass of ion-exchanged water is added dropwise over 10 minutes. After the reaction is carried out for 50 minutes after the dropping, the remaining monomeric emulsion liquid is added dropwise over 220 minutes, reacted for another 180 minutes, and then cooled, to

obtain a resin particle dispersion liquid (1) in which resin particles are dispersed. The solid content concentration of the resin particle dispersion liquid (1) is 34 mass%. The average particle diameter of the resin particles is 0.40 μm.

The average particle diameter of the resin particles is the volume average particle diameter measured by the method described above (the same applies hereinafter). The results are shown in Table 1.

-Preparation of resin particle dispersion liquids (2) to (8) and (101)-

A resin particle dispersion liquid is obtained in the same manner as in the resin particle dispersion liquid (1), except that the type and amount (parts by mass) of the monomer are changed according to Table 1.

[Table 1]

| | Resin particle dispersion liquid | | | | | | | | |
|---|---|---|---|---|---|---|---|---|---|
| | No. | Monomer composition | | | | | Tg | Solid content (mass%) | Average particle diameter (μm) |
| | | Main monomer | | Nonionic monomer | | | | | |
| | | St | MMA | PME-400 | PME-1000 | PP-1000 | | | |
| Example 1 | 1 | 1000 | | 5 | | | 100 | 35 | 0.40 |
| Example 2 | 2 | 1000 | | 9 | | | 100 | 34 | 0.42 |
| Example 3 | 3 | 1000 | | 2.1 | | | 100 | 35 | 0.40 |
| Example 4 | 4 | 1000 | | | 5 | | 100 | 35 | 0.41 |
| Example 5 | 5 | 1000 | | | | 5 | 100 | 34 | 0.40 |
| Example 6 | 6 | | 1000 | 5 | | | 70 | 34 | 0.40 |
| Example 7 | 7 | 1000 | | 14 | | | 100 | 34 | 0.39 |
| Example 8 | 8 | 1000 | | 1.6 | | | 100 | 33 | 0.42 |
| Comparative Example 1 | 101 | 1000 | | | | | 100 | 35 | 0.42 |

The details of the abbreviations in Table 1 are shown below.

· St: styrene
· MMA: methyl methacrylate
· PME-400: methoxypolyethylene glycol methacrylate ("BLEMMER-PME-400" manufactured by NOF Corporation), a monomer having a polyalkylene oxide group represented by the general formula (POA) in which $R^{POA1}$ = methyl group, n = 0, and m is about 9
· PME-1000: methoxypolyethylene glycol methacrylate ("BLEMMER-PME-1000" manufactured by NOF Corporation), a monomer having a polyalkylene oxide group represented by the general formula (POA) in which $R^{POA1}$ = methyl group, n = 0, and m is about 23
· PP-1000: polypropylene glycol monomethacrylate ("BLEMMER-PP-1000" manufactured by NOF Corporation), a monomer having a polyalkylene oxide group represented by the general formula (POA) in which $R^{POA1}$ = hydrogen group, n is about 5, and m = 0

<Example 1>

[Preparation of Polyimide Precursor-containing Aqueous Composition (1)]

Into 170 g of the resin particle dispersion liquid (1), 28 g (96 mmol) of 3,3',4,4'-biphenyltetracarboxylic dianhydride (BPDA), 10 g (96 mmol) of p-phenylenediamine (PDA), 360 g of ion-exchanged water, and N-methyl-2-pyrrolidone (NMP) as an aprotic polar solvent are added, and the mixture is stirred at 20°C for 10 minutes.

Then, N-methylmorpholine (organic amine compound): 20 g (211 mmol) is added slowly, the reaction is carried out by stirring for 24 hours while maintaining the reaction temperature at 60°C, and a polyimide precursor (A) is generated by BPDA and PDA, thereby obtaining a polyimide precursor-containing aqueous composition (1).

In the obtained polyimide precursor-containing aqueous composition, the amounts of ion-exchanged water and the aprotic polar solvent are adjusted so as to have the amounts (mass% with respect to aqueous composition) and mass ratios shown in Table 2.

<Examples 2 to 10 and Comparative Example 1>

A polyimide precursor-containing aqueous composition is obtained in the same manner as in Example 1, except that the type and amount of the resin particle dispersion liquid are changed as appropriate to obtain the content of each component as shown in Table 2.

<Evaluation>

A porous polyimide film is produced using the polyimide precursor-containing aqueous composition obtained in each Example.

(Method for Producing Porous Polyimide Film)

First, an aluminum plate is prepared as a substrate. The aluminum plate is provided with a release layer obtained by coating a solution of a release agent KS-700 (manufactured by Shin-Etsu Chemical Co., Ltd.) in toluene and performing a heat treatment at 400°C in a manner of having a thickness of about 0.05 μm after drying.

Next, the polyimide precursor-containing aqueous composition obtained in each Example is coated onto the release layer of the aluminum substrate such that the film thickness after imidization is 50 μm to form a coating film, and the coating film is dried at 80°C for 2 hours. Thereafter, the temperature is raised from room temperature (25°C, the same applies hereinafter) to 390°C at a rate of 10°C/min, held at 390°C for 1 hour, and then cooled to room temperature to obtain a porous polyimide film having a length of 15 cm, a width of 15 cm, and a film thickness of 50 μm.

(Number of Pinholes)

The obtained porous polyimide film is observed, and the number of pinholes having a maximum size of 100 μm or more is counted. Then, evaluation is performed according to the following evaluation criteria.

A: the number of pinholes: 0
B: the number of pinholes: 1
C: the number of pinholes: 2 or more and 4 or less
D: the number of pinholes: 5 or more

[Coatability]

The film thickness of the obtained dried film is measured at 9 points evenly separated in the plane, and the film thickness variation is quantified according to the following equation.

Equation: film thickness variation = (maximum film thickness value - minimum film thickness value)/average film thickness value

Then, evaluation is performed according to the following evaluation criteria. L1, L2, and L3 are acceptable.

L1: less than 3.0
L2: 3.0 or more and less than 8.0
L3: 8.0 or more and less than 15.0
L4: 15.0 or more

[Table 2]

| | PI precursor-containing aqueous composition | Resin particle dispersion liquid | Solvent | | | Evaluation | |
|---|---|---|---|---|---|---|---|
| | | | Water | Aprotic polar solvent | Mass ratio of resin particles: aprotic polar solvent | Number of pinholes | Coatability |
| | | | Mass% (with respect to aqueous composition) | Type/mass% (with respect to aqueous composition) | | | |
| Example 1 | 1 | 1 | 62 | NMP/4 | 4:1 | A | L1 |
| Example 2 | 2 | 2 | 62 | NMP/4 | 4:1 | A | L2 |
| Example 3 | 3 | 3 | 62 | NMP/4 | 4:1 | A | L1 |
| Example 4 | 4 | 4 | 62 | NMP/4 | 4:1 | A | L1 |
| Example 5 | 5 | 5 | 62 | NMP/4 | 4:1 | A | L1 |
| Example 6 | 6 | 6 | 62 | NMP/4 | 4:1 | A | L1 |
| Example 7 | 7 | 7 | 62 | NMP/4 | 4:1 | B | L1 |
| Example 8 | 8 | 8 | 62 | NMP/4 | 4:1 | B | L3 |
| Example 9 | 9 | 1 | 63 | NMP/2 | 4:0.5 | B | L3 |
| Example 10 | 10 | 1 | 52 | NMP/16 | 4:4 | A | L1 |
| Comparative Example 1 | 101 | 101 | 62 | NMP/4 | 4:1 | D | L1 |

From the above results, it can be seen that in Examples, a porous polyimide film having a reduced number of pinholes (that is, number of coarse pores) is obtained as compared with Comparative Example.

## Claims

1. A polyimide precursor-containing aqueous composition, comprising:

   a polyimide precursor;
   resin particles having a polyalkylene oxide group; and
   a solvent containing water and an aprotic polar solvent.

2. The polyimide precursor-containing aqueous composition according to claim 1, wherein the polyalkylene oxide group is a group represented by the following general formula (POA),

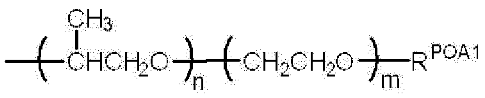

general formula (POA)

   wherein, in the general formula (POA), $R^{POA1}$ represents a hydrogen atom, an alkyl group, or an aryl group, n represents an integer of 0 or 1 or more, m represents an integer of 0 or 1 or more, and n + m is an integer of 2 or more and 50 or less.

3. The polyimide precursor-containing aqueous composition according to claim 2, wherein, in the general formula (POA), $R^{POA1}$ represents an alkyl group having 1 or more and 12 or less carbon atoms, n represents 0, and m represents an integer of 2 or more and 30 or less.

4. The polyimide precursor-containing aqueous composition according to any one of claims 1 to 3, wherein the resin particles are resin particles containing a copolymer of a vinyl-based monomer A having the polyalkylene oxide group and a vinyl-based monomer B having no polyalkylene oxide group, and
   a mass ratio A/B of the vinyl-based monomer A to the vinyl-based monomer B is 1.5/1000 or more and 15/1000 or less.

5. The polyimide precursor-containing aqueous composition according to claim 4, wherein the mass ratio A/B of the vinyl-based monomer A to the vinyl-based monomer B is 2/1000 or more and 10/1000 or less.

6. The polyimide precursor-containing aqueous composition according to any one of claims 1 to 5, wherein a mass ratio of the resin particles to the aprotic polar solvent is 1 or more and 8 or less.

7. The polyimide precursor-containing aqueous composition according to claim 6, wherein the mass ratio of the resin particles to the aprotic polar solvent is 3 or more and 5 or less.

8. The polyimide precursor-containing aqueous composition according to any one of claims 1 to 7, wherein a content of the water is 60 mass% or more with respect to a total mass of the polyimide precursor-containing aqueous composition.

9. A method for producing a porous polyimide film, comprising:

   coating the polyimide precursor-containing aqueous composition according to any one of claims 1 to 8 onto a substrate to form a coating film;
   drying the coating film to form a film;
   imidizing the polyimide precursor contained in the film to form a polyimide film; and
   removing the resin particles from the film or the polyimide film.

10. The method for producing a porous polyimide film according to claim 9, wherein a porous polyimide film having a film thickness of 50 μm or more is produced.

## Patentansprüche

1. Polyimidvorläuferhaltige wässrige Zusammensetzung, umfassend:

   einen Polyimidvorläufer;
   Harzpartikel mit einer Polyalkylenoxidgruppe; und
   ein Lösungsmittel, das Wasser und ein aprotisches polares Lösungsmittel enthält.

2. Polyimidvorläuferhaltige wässrige Zusammensetzung nach Anspruch 1,

   wobei die Polyalkylenoxidgruppe eine Gruppe ist, die durch die folgende allgemeine Formel (POA) dargestellt ist,

   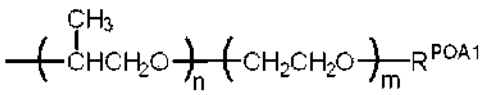
   allgemeine Formel (POA)

   wobei in der allgemeinen Formel (POA) $R^{POA1}$ ein Wasserstoffatom, eine Alkylgruppe oder eine Arylgruppe darstellt, n eine ganze Zahl von 0 oder 1 oder höher darstellt, m eine ganze Zahl von 0 oder 1 oder höher darstellt, und n + m ist eine ganze Zahl von 2 oder höher und 50 oder niedriger ist.

3. Polyimidvorläuferhaltige wässrige Zusammensetzung nach Anspruch 2, wobei in der allgemeinen Formel (POA) $R^{POA1}$ eine Alkylgruppe mit 1 oder mehr und 12 oder weniger Kohlenstoffatomen darstellt, n 0 darstellt und m eine ganze Zahl von 2 oder höher und 30 oder niedriger darstellt.

4. Polyimidvorläuferhaltige wässrige Zusammensetzung nach einem der Ansprüche 1 bis 3, wobei die Harzpartikel Harzpartikel sind, die ein Copolymer aus einem Monomer A auf Vinylbasis mit der Polyalkylenoxidgruppe und einem Monomer B auf Vinylbasis ohne Polyalkylenoxidgruppe enthalten, und
   ein Massenverhältnis A/B des Monomers A auf Vinylbasis zu dem Monomer B auf Vinylbasis 1,5/1000 oder höher und 15/1000 oder niedriger beträgt.

5. Polyimidvorläuferhaltige wässrige Zusammensetzung nach Anspruch 4, wobei das Massenverhältnis A/B des Monomers A auf Vinylbasis zu dem Monomer B auf Vinylbasis 2/1000 oder höher und 10/1000 oder niedriger beträgt.

6. Polyimidvorläuferhaltige wässrige Zusammensetzung nach einem der Ansprüche 1 bis 5, wobei ein Massenverhältnis der Harzpartikel zu dem aprotischen polaren Lösungsmittel 1 oder höher und 8 oder niedriger beträgt.

7. Polyimidvorläuferhaltige wässrige Zusammensetzung nach Anspruch 6, wobei das Massenverhältnis der Harzpartikel zu dem aprotischen polaren Lösungsmittel 3 oder höher und 5 oder niedriger beträgt.

8. Polyimidvorläuferhaltige wässrige Zusammensetzung nach einem der Ansprüche 1 bis 7, wobei ein Gehalt des Wassers 60 Masse-% oder höher in Bezug auf eine Gesamtmasse der Polyimidvorläufer enthaltenden wässrigen Zusammensetzung beträgt.

9. Verfahren zur Herstellung einer porösen Polyimidfolie, umfassend:

   Beschichten eines Substrats mit der polyimidvorläuferhaltigen wässrigen Zusammensetzung nach einem der Ansprüche 1 bis 8, um eine Beschichtungsfolie zu bilden;
   Trocknen der Beschichtungsfolie, um eine Folie zu bilden;
   Imidisieren des in der Folie enthaltenen Polyimidvorläufers, um eine Polyimidfolie zu bilden; und
   Entfernen der Harzpartikel von der Folie oder der Polyimidfolie.

10. Verfahren zur Herstellung einer porösen Polyimidfolie nach Anspruch 9, wobei eine poröse Polyimidfolie mit einer Foliendicke von 50 μm oder höher hergestellt wird.

**Revendications**

1. Composition aqueuse contenant un précurseur de polyimide, comprenant :

   un précurseur de polyimide ;
   des particules de résine ayant un groupe poly(oxyde d'alkylène) ; et
   un solvant contenant de l'eau et un solvant polaire aprotique.

2. Composition aqueuse contenant un précurseur de polyimide selon la revendication 1, dans laquelle le groupe poly(oxyde d'alkylène) est un groupe représenté par la formule générale suivante (POA),

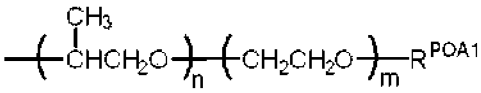
formule générale (POA)

   dans laquelle, dans la formule générale (POA), $R^{POA1}$ représente un atome d'hydrogène, un groupe alkyle ou un groupe aryle, n représente un nombre entier de 0 ou 1 ou plus, m représente un nombre entier de 0 ou 1 ou plus, et n + m est un entier supérieur ou égal à 2 et inférieur ou égal à 50.

3. Composition aqueuse contenant un précurseur de polyimide selon la revendication 2, dans laquelle, dans la formule générale (POA), $R^{POA1}$ représente un groupe alkyle ayant 1 ou plus et 12 ou moins atomes de carbone, n représente 0, et m représente un nombre entier de 2 ou plus et 30 ou moins.

4. Composition aqueuse contenant un précurseur de polyimide selon l'une quelconque des revendications 1 à 3, dans laquelle les particules de résine sont des particules de résine contenant un copolymère d'un monomère à base de vinyle A ayant le groupe poly(oxyde d'alkylène) et d'un monomère à base de vinyle B n'ayant pas le groupe poly(oxyde d'alkylène), et
   un rapport massique A/B du monomère à base de vinyle A au monomère à base de vinyle B est de 1,5/1000 ou plus et de 15/1000 ou moins.

5. Composition aqueuse contenant un précurseur de polyimide selon la revendication 4, dans laquelle le rapport massique A/B du monomère à base de vinyle A au monomère à base de vinyle B est de 2/1000 ou plus et de 10/1000 ou moins.

6. Composition aqueuse contenant un précurseur de polyimide selon l'une quelconque des revendications 1 à 5, dans laquelle un rapport massique des particules de résine au solvant polaire aprotique est de 1 ou plus et de 8 ou moins.

7. Composition aqueuse contenant un précurseur de polyimide selon la revendication 6, dans laquelle le rapport massique des particules de résine au solvant polaire aprotique est de 3 ou plus et de 5 ou moins.

8. Composition aqueuse contenant un précurseur de polyimide selon l'une quelconque des revendications 1 à 7, dans laquelle une teneur en eau est de 60 % en masse ou plus par rapport à une masse totale de la composition aqueuse contenant un précurseur de polyimide.

9. Procédé de production d'un film de polyimide poreux, comprenant :

   le dépôt de la composition aqueuse contenant un précurseur de polyimide selon l'une quelconque des revendications 1 à 8 sur un substrat pour former un film de revêtement ;
   le séchage du film de revêtement pour former un film ;
   l'imidation du précurseur de polyimide contenu dans le film pour former un film de polyimide ; et
   le retrait des particules de résine du film ou du film de polyimide.

10. Procédé de production d'un film de polyimide poreux selon la revendication 9, dans lequel un film de polyimide poreux ayant une épaisseur de film de 50 μm ou plus est produit.

*FIG.1*

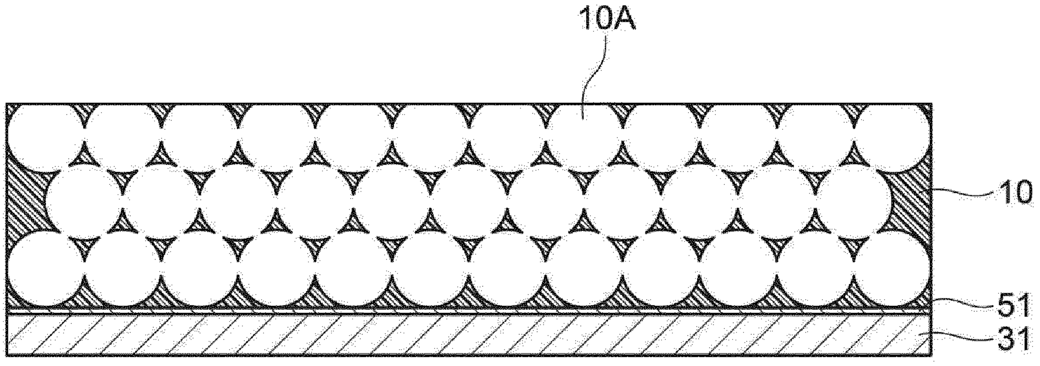

FIG.2

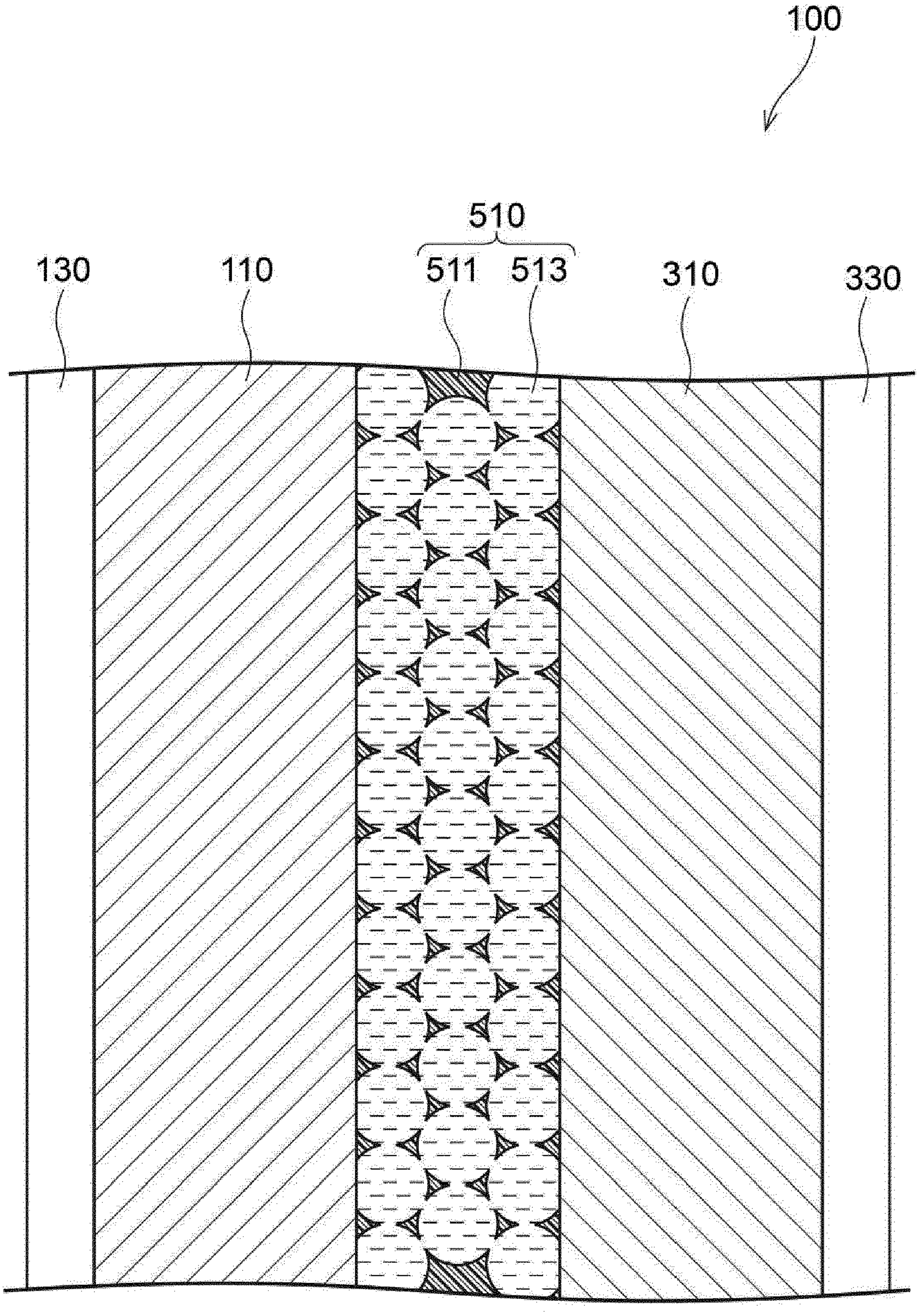

FIG.3

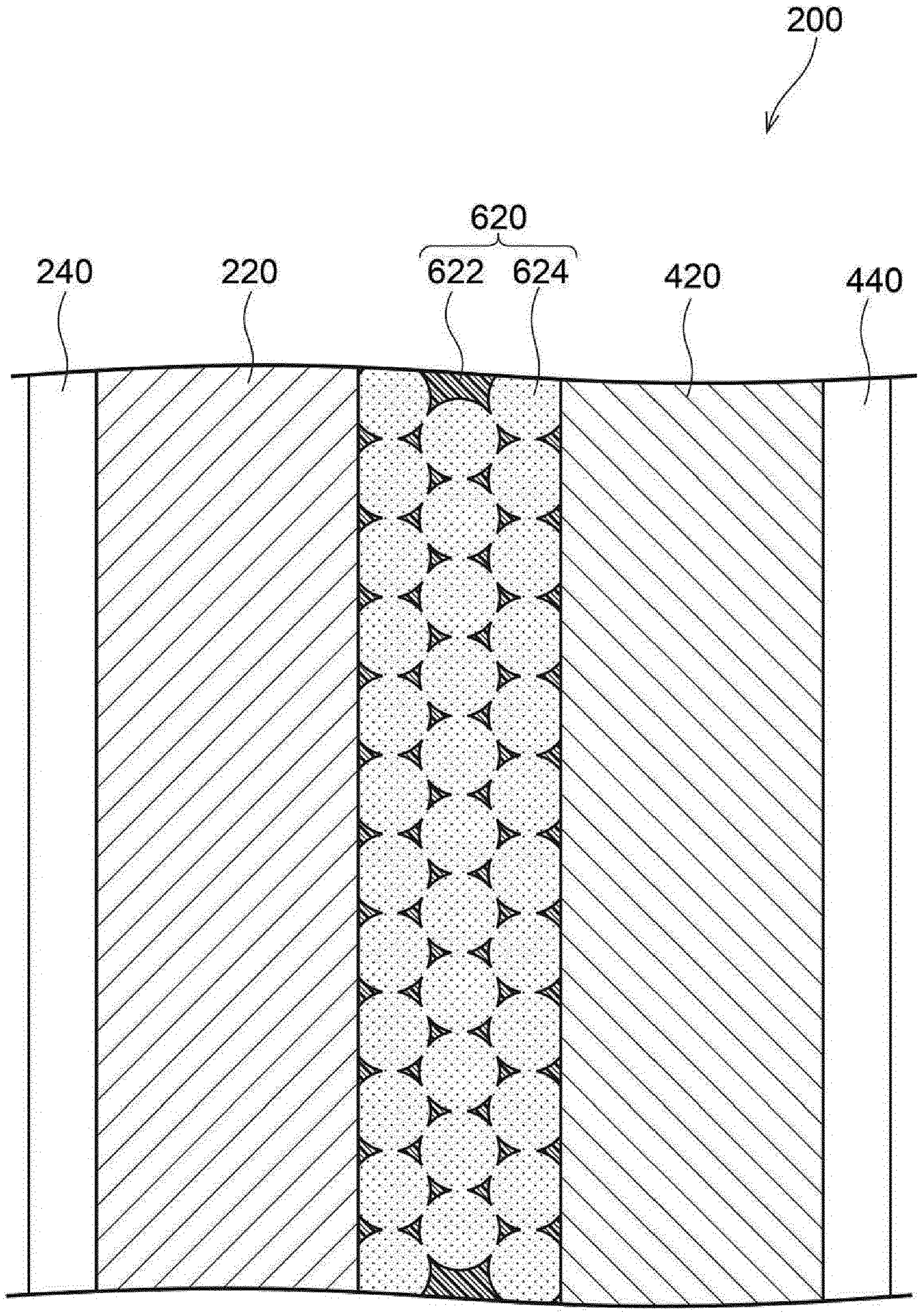

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2016056225 A
- US 2018244886 A